(19) Europäisches Patentamt / European Patent Office / Office européen des brevets

(11) **EP 3 969 278 B1**

(12) **EUROPEAN PATENT SPECIFICATION**

(45) Date of publication and mention
of the grant of the patent:
**02.07.2025 Bulletin 2025/27**

(21) Application number: **20809856.6**

(22) Date of filing: **14.05.2020**

(51) International Patent Classification (IPC):
*B32B 7/12* (2006.01)     *B32B 9/00* (2006.01)
*B32B 9/04* (2006.01)     *B32B 15/08* (2006.01)
*B32B 25/08* (2006.01)     *B32B 27/08* (2006.01)
*B32B 27/20* (2006.01)     *B32B 27/28* (2006.01)
*B32B 27/30* (2006.01)     *B32B 27/32* (2006.01)
*B32B 27/34* (2006.01)     *B32B 27/36* (2006.01)

(52) Cooperative Patent Classification (CPC):
B32B 27/30; B32B 7/12; B32B 9/005; B32B 9/045;
B32B 15/08; B32B 25/08; B32B 27/08;
B32B 27/20; B32B 27/281; B32B 27/302;
B32B 27/304; B32B 27/308; B32B 27/32;
B32B 27/34; B32B 27/365;     (Cont.)

(86) International application number:
**PCT/US2020/032776**

(87) International publication number:
**WO 2020/236499 (26.11.2020 Gazette 2020/48)**

(54) **THIN MULTI-LAYER PANELING STRUCTURE**

DÜNNE MEHRSCHICHTVERKLEIDUNGSSTRUKTUR

STRUCTURE DE PANNEAU MULTICOUCHE MINCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.05.2019 US 201962849333 P**

(43) Date of publication of application:
**23.03.2022 Bulletin 2022/12**

(73) Proprietor: **Trinseo Europe GmbH
8810 Horgen (CH)**

(72) Inventors:
• **WANG, Jing-Han (Helen)
Blue Bell, Pennsylvania 19422 (US)**
• **CROMER, Brian
Royersford, Pennsylvania 19468 (US)**

(74) Representative: **SSM Sandmair
Patentanwälte Rechtsanwalt
Partnerschaft mbB
Joseph-Wild-Straße 20
81829 München (DE)**

(56) References cited:
WO-A2-2018/132818     US-A- 5 322 899
US-A1- 2009 280 252     US-A1- 2019 106 558
US-B2- 9 096 760

(52) Cooperative Patent Classification (CPC): (Cont.)
B32B 2250/02; B32B 2250/03; B32B 2260/021;
B32B 2260/046; B32B 2264/102; B32B 2264/107;
B32B 2264/108; B32B 2307/406; B32B 2307/558;
B32B 2307/584; B32B 2307/714; B32B 2307/732;
B32B 2479/00; B32B 2605/003; B32B 2605/08;
B32B 2605/18; B32B 2607/00

**Description**

**FIELD OF THE INVENTION**

The invention relates to a multi-layer paneling structure having a high gloss first layer cap and a second layer of high impact resistance thermoplastic polymer or composites for exterior and interior paneling applications where chemical resistance and/or scratch resistance is desired.

The invention also relates to a high gloss, multi-layer panel that can be easily repaired, once marred, to return the surface gloss to at least 90% of the original surface gloss.

The invention further relates to articles made with the multi-layer paneling structure of the invention. The multi-layer structure can be used alone, or can be very thin and used as a replacement for an undercoating and coating on an article, such as a metal car part.

**BACKGROUND OF THE INVENTION**

High gloss finishes are appealing, and are desired in many articles, including car interiors and exteriors, as well as in sports equipment, and lawn and garden equipment. One problem with typical gloss coatings and paints, is that the surface gloss layer is easily damaged due to scratching, marring and chemical exposure. Once marred, the thin surface coating is difficult to repair. Additionally, many coatings involve the use of volatile organic solvents which can cause health and/or environmental damage.

Certain structural plastics, such as high impact polystyrene (HIPS), acrylonitrile/butadiene/ styrene (ABS) resins, poly(vinyl chloride)(PVC) resins, and the like, exhibit attractive mechanical properties when extruded, molded, or formed into various articles of manufacture. Although these structural plastics are strong, tough and relatively inexpensive, the properties of their exposed surfaces are less than ideal. They are easily degraded by light; can be easily scratched; and are eroded by common solvents.

A common practice in the industry to apply another resinous material over the structural plastic to protect the underlying structural material and provide a surface that can withstand abuse associated with the use environment. Such surfacing materials are called "capstocks".

The capstock is generally much thinner than the structural plastic, typically being about 10% to about 25% of the total thickness of the composite comprising the capstock and structural plastic plies. For example, the thickness of the capstock can be about 0.01 mm to 0.8 mm, preferably 0.0127 mm to 0.65mm, and more preferably from 0.04 mm to 0.38 mm whereas the thickness of the structural plastic ply can be about 1.0 to about 10 mm.

As a class, acrylic resins, known for their excellent optical characteristics, resistance to degradation by sunlight, hardness, inertness to water and common chemicals, durability, and toughness, are capstocks of choice for various structural plastics, such as ABS sheet. The mechanical properties of the capstock generally are secondary to those of the structural plastic, but it is important that the capstock not adversely affect the mechanical properties of the composite.

Typical acrylic capstock materials, such as Arkema's SOLARKOTE® resins are described in US 6,852,405. These capstock materials are generally impact modified. A problem with impact modified single acrylic sheet, is that the impact modification diminishes both the gloss, and the chemical resistance of the cap layer.

Capstocks can be cross-linked to improve chemical resistance, but it is known to be difficult to make cross-linked capstocks thin enough to replace a painted finish.

US 5,975,625, and US 6,852,405 describes automotive vehicle bodies having a single layer plastic outer body and an inner metal frame.

WO 2018/132818 A2 discloses a multi-layer structure, comprising a high-gloss, mar resistant outer layer comprising a thermoplastic polymer selected from the group consisting of acrylic polymers, styrenic polymers an and a nano-sized inorganic filler and an inner layer.

**Problem/Solution**

There is a desire for a thin capstock material that has a very high gloss, and has a high impact resistance, where the high gloss resists gloss reduction damage caused by surface contacts with chemicals such as isopropyl alcohol, ethyl alcohol, methyl alcohol, sulphuric acid, phosphoric acid, toluene, isooctane, diisobutylene, and chemical mixtures such as gasoline fuel, diesel fuel, bio-fuel, bitumen, antifreeze, brake fluid, engine oil, Pancreatin (bird feces substitute), tree resin, and sunscreen. The high gloss finish should also be easily restored to within 10% of the initial surface gloss.

It has surprisingly been found that a thin high gloss surface layer over a high-impact resistance interior layer, can be provided that will minimize the gloss reduction, and enable easy restoration of the high gloss finish to within 10% of the original gloss.

Further advantages of the invention over traditional high gloss paint (used over an undercoating) in automotive applications include reduction of manufacturing steps and elimination of volatile organic solvents associated with coatings.

The multi-layer structure of the invention can pass an 85°C exposure test, and should be cost competitive with traditional high gloss paint.

Further, while it is difficult to handle and process a typical cross-linked capstock where the cross-linking occurs during the polymerization, a post-polymerization reaction can be used to form useful cross-linking, such as by irradiation such as UV radiation and e-beam radiation.

## SUMMARY OF THE INVENTION

In a first aspect, the invention relates to a multi-layer polymer structure comprising: a. a thin, high gloss outer polymeric cap layer, having a 60° gloss of greater than 80, preferably greater than 85, and more preferably greater than 90, as measured by a BYK Gardner Micro-Tri-Gloss 20/60/85 degree Gloss Meter, wherein said cap layer has a thickness of from 0.01 mm to 0.8 mm, preferably 0.0127 mm to 0.65mm, and more preferably from 0.04 mm to 0.38 mm, wherein said thin, high gloss outer polymeric cap layer comprises as the matrix polymer at least one acrylic and/or styrenic polymer; and b. an internal high impact resistant layer, wherein said high impact layer has an ASTM D256 notched Izod result at 23°C of greater than 4.4 kg-cm/cm (0.8 ft-lb/in), preferably greater than 5.4 kg-cm/cm (1.0 ft-lb/in), and more preferably greater than 7.1 kg-cm/cm (1.3 ft-lb/in), wherein said internal high impact resistant layer, comprises a thermoplastic selected from the group consisting of acrylonitrile butyl styrene (ABS), polyvinyl chloride (PVC), high impact polystyrene (HIPS), polycarbonate (PC), a blend of acrylic polymer and polylactic acid, impact modified acrylics, impact modified styrenics, polyamides, polyimides, polyurethanes, polyesters, and blends thereof.

In a second aspect, the thin high gloss outer cap layer has a heat deflection temperature (HDT), as measured by ASTM D648 (1.8 MPa) of at least 79°C (175°F) when prior to measurement, the samples are annealed at 80°C for 96 hours then slow-cooled over 4 hours to 23°C.

In a third aspect, the multi-layer polymer structure contains, in the thin, high gloss outer cap layer, less than 5 weight percent, preferably less than 3 weight percent, preferably less than 1 weight percent, and most preferably no impact modifiers.

In a further aspect, the thin, high gloss outer cap layer is chemical resistant and scratch resistant, and has a gloss retention of over 85%, preferably over 90% and a delta E of less than 5, preferably less than 3 for each test material using the following procedure: for 6x6 inch samples conditioned at 85°C for one hour and rubbed with ten back-and-forth strokes with a PIG Hazmat pad soaked with a test chemical, then wiped with a clean PIG Hazmat pad, washed, and reconditioned for at least one hour, and 60° gloss re-measured. The test chemicals for the rub are chemicals such as butylene glycol and glyceryl stearate typically found in sunscreens. The cloths used in the test may be 3"x14" PIG Hazmat Pads (MAT302) or 3"x14" PIG Hazmat Pads (MAT423).

In a fifth aspect, the thin, high gloss outer cap layer contains a polymer having a weight average molecular weight of at least 70,000 g/mol.

In an aspect outside the scope of the invention, the internal high impact resistant layer, is a thermoset, thermoplastic, and/or a polymer composite.

In a further aspect, the high-impact layer is a composite composition containing particles, nanoparticles, and/or fibers.

In a further aspect, the composite composition of any of the previous aspects is a fiber-reinforced acrylic composite, said composite formed from a blend of one or more acrylic polymers with one or more acrylic monomers that are impregnated into said fibers, followed by polymerization.

In an further aspect, the multi-layer structure further comprises a tie layer or adhesive layer between the exterior high gloss layer, and interior high impact layer.

In a further aspect, the multi-layer structure exists over a substrate, wherein said substrate is selected from metal; ceramics; and cellulosics; thermoplastic, elastomeric, and thermoset polymers having a thickness in the range 0.1 mm to 30 mm and preferably 1.0 mm to 5 mm.

In a further aspect, the multi-layer structure comprises two high gloss outer cap layers, one on either side of the internal high impact resistant layer.

In a further aspect, a method for restoring the gloss on a chemically or physically marred polymer multi-layer structure is presented, where the method includes the step of removing or hiding the mar.

In a further aspect, the method involves the mar restoration through the process of buffing, polishing, wiping, chemical treating, and/or sanding said multi-layer structure, wherein said gloss is restored to within 30%, preferably 20%, and most preferably within 10% of the original gloss, as measured by a BYK Gardner Micro-Tri-Gloss 20/60/85 degree Gloss Meter,

In a further aspect, the multi-layer polymeric structure is manufactured by thermoforming, in-mold decorating, sequential injection molding, coextrusion, resin transfer molding with in-mold decoration, or 3D printing (additive manufacturing).

In a further aspect, an article is presented which contains the thin multi-layer polymeric structure where the article is selected from the group consisting of exterior paneling, automotive body panels, automotive body trim, recreational vehicle body panels or trims, exterior panels for recreational sporting equipment, marine equipment, exterior panels for outdoor lawn, garden and agricultural equipment and exterior paneling for marine, aerospace structures, aircraft, public transportation applications, interior paneling applications, interior automotive trims, interior panels for marine equipment, interior panels for aerospace and aircraft, interior panels for public transportation applications, and paneling for appliances, furniture, and cabinets.

## DETAILED DESCRIPTION OF THE INVENTION

"Copolymer" as used herein, means a polymer having two or more different monomer units. "Polymer" is used to mean both homopolymer and copolymers. For example, as used herein, "PMMA" and "polymethyl methacrylate" are used to connote both the homopolymer and copolymers, unless specifically noted otherwise. (Meth)acrylate is used to connote both acrylates and methacrylates, as well as mixtures of these. Polymers may be straight chain, branched, star, comb, block, or any other structure. The polymers may be homogeneous, heterogeneous, and may have a gradient distribution of co-monomer units. All references cited are incorporated herein by reference.

As used herein, unless otherwise described, percent shall mean weight percent. Molecular weight is a weight average molecular weight as measured by GPC. In cases where the polymer contains some cross-linking, and GPC cannot be applied due to an insoluble polymer fraction, soluble fraction / gel fraction or soluble fraction molecular weight after extraction from gel is used.

"Multi-layer" as used herein describes a structure having at least two layers attached directly or indirectly to each other, wherein the exterior layer is a high-gloss capstock, and at least one interior layer is a high impact layer. The layers may be directly in contact with each other, or may contain one or more other layers in between, such as a tie layer, an adhesive layer, a vapor barrier, a color layer or special effects layer, etc. In one embodiment, the multi-layer structure has a high gloss capstock on either side of the interior high impact layer. This arrangement is especially useful where the multilayer structure is transparent or translucent, and the surfaces of both sides would be visible.

### Exterior, high gloss layer

The exterior high gloss layer is an acrylic- and/or styrenic-based layer; is chemical resistant, mar resistant and scratch resistant, with any deterioration of the high gloss being restorable to within 10% of the original gloss. The 60° gloss of the exterior layer is greater than 80, preferably greater than 85, and more preferably greater than 90, as measured by a BYK Gardner Micro-Tri-Gloss 20/60/85 degree Gloss Meter.

The exterior, high gloss layer may optionally contain 0.01-20 wt% nano-sized particles additives to improve the chemical resistance, mar resistance, scratch resistance, and/or improve the ability of the high gloss surface to be restored after incurring damage from chemical exposure, marring, and/or scratching. Useful nano-sized inorganic fillers include, but are not limited to silica, alumina, zinc oxide, barium oxide, molybdenum disulfide, boron nitride, tungsten disulfide, titanium oxide, nanographene, nanographite, graphite nanoplatelets, and graphite oxide nanoparticles.

The exterior, high gloss layer is thin, having a thickness of from 0.01 mm to 0.8 mm, preferably 0.0127 mm to 0.65mm, and more preferably from 0.04 mm to 0.38 mm.

The exterior, high gloss layer has a heat deflection temperature (HDT), of greater than 175 °F (or 80 °C) as measured by ASTM D648 (1.8 MPa), when samples are annealed at 60-80°C for 96 hours then slow-cooled over 4 hours to 23°C.

The acrylic or styrenic polymer of the invention has a weight average molecular weight of between 50,000 and 500,000 g/mol, and preferably from 70,000 and 200,000 g/mol, as measured by gel permeation chromatography. The molecular weight distribution of the acrylic polymer may be monomodal, or multimodal with a polydispersity index greater than 1.5. Copolymers containing comonomers that will lower the HDT of the copolymer, such as $C_{1-6}$ acrylates, should have a weight average molecular weight of greater than 100,000 g/mol. In a preferred embodiment, an acrylic cap layer will contain predominately methyl methacrylate monomer units, and have less than 10 weight percent, and preferably less than 5 weight percent of comonomers. The acrylic capstock may also have comonomers such as methacrylic acid, tertiobutyl cyclohexanol methacrylate, alpha-methyl styrene, and other $T_g$ increasing monomers, where the total co-monomer content can be up to 25%.

In one embodiment the cap layer is a blend of an acrylic or styrenic polymer with up to 90 weight percent, preferably less than 60 weight percent, more preferably less than 35 weight percent % of polyvinylidene fluoride (PVDF) homopolymers or copolymers. A blend of acrylic polymers with less than 30 weight percent, preferably less than 20 weight percent of polylactic acid can also be used. The high gloss acrylic capstock can also be a crosslinked acrylic sheet with less than 5% crosslinking agent.

In one embodiment, the exterior, high-gloss layer may be a polymer blend, containing the acrylic or styrenic polymer plus up to 60 wt%, preferably up to 40 wt% of one or more other compatible, miscible or semi-miscible polymers. One useful blend is a blend of a poly(meth)acrylic polymer or copolymer with acrylonitrile-styrene-acrylate (ASA) polymer.

In one embodiment, crosslinking is provided by a post-polymerization reaction, such as by the use of irradiation. Useful irradiation includes UV radiation, gamma radiation and e-beam. By using a post-polymerization cross-linking mechanism, a thinner cap layer that is easily processable can be achieved.

"Acrylic polymer" as used herein is meant to include polymers, copolymers and terpolymers formed from alkyl methacrylate and alkyl acrylate monomers, and mixtures thereof. The alkyl methacrylate monomer is preferably methyl methacrylate, which may make up from 50 to 100 percent of the monomer mixture. 0 to 50 percent of other acrylate and methacrylate monomers or other ethylenically unsaturated monomers, included but not limited to, styrene, alpha methyl styrene, acrylonitrile, and crosslinkers at low levels may also be present in the monomer mixture. Other methacrylate and acrylate monomers useful in the monomer mixture include, but are not limited to, methyl acrylate, ethyl acrylate and ethyl methacrylate, butyl acrylate and butyl methacrylate, iso-octyl methacrylate and acrylate, n-octyl acrylate, lauryl acrylate and lauryl methacrylate, stearyl acrylate and stearyl methacrylate, isobornyl acrylate and methacrylate, methoxy ethyl acrylate and methacrylate, 2-ethoxy ethyl acrylate and methacrylate, isodecyl acrylate and methacrylate, tertiobutyl cyclohexyl acrylate and methacrylate, tertiobutyl cyclohexanol methacrylate, trimethyl cyclohexyl acrylate and methacrylate, methoxy polyethylene glycol methacrylate and acrylate with 2-11 ethylene glycol units, penoxyethyl acrylate and methacrylate, alkoxylated phenol acrylate, ethoxylated phenyl acrylate and methacrylate, epoxypropyl methacrylate, tetrahydrofurfuryl acrylate and methacrylate, alkoxylated tetrahydrofurfuryl acrylate, cyclic trimethylolpropane formal acrylate, carprolactone acrylate, dimethylamino ethyl acrylate and methacrylate monomers. Alkyl (meth) acrylic acids such as methacrylic acid and acrylic acid or C1-C8 esters thereof can be useful for the monomer mixture. Alkyl (meth) acrylic acids such as methacrylic acid and acrylic acid can be useful for the monomer mixture. Most preferably the acrylic polymer is a copolymer having 85 - 99.5 weight percent of methyl methacrylate units and from 0.5 to 15 weight percent of one or more $C_{1-8}$ straight or branched alkyl acrylate units.

Styrenic-based polymers include, but are not limited to, polystyrene, high-impact polystyrene (HIPS), acrylonitrile-butadiene-styrene (ABS) copolymers, acrylonitrile-styrene-acrylate (ASA) copolymers, styrene acrylonitrile (SAN) copolymers, methacrylate-butadiene-styrene (MBS) copolymers, styrene-butadiene copolymers, styrene-butadiene-styrene block (SBS) copolymers and their partially or fully hydrogenenated derivatives, styrene-isoprene copolymers, styrene-isoprene-styrene (SIS) block copolymers and their partially or fully hydrogenated derivatives, and styrene-(meth)acrylate copolymers such as styrene-methyl methacrylate copolymers (S/MMA). A preferred styrenic polymer is ASA. The styrenic polymers of the invention can be manufactured by means known in the art, including emulsion polymerization, solution polymerization, and suspension polymerization. Styrenic copolymers of the invention have a styrene content of at least 10 percent by weight, preferably at least 25 percent by weight.

The capstock should contain less than 15 weight percent impact modifier, preferably less than 5 weight percent, more preferably less than 3 weight percent and most preferably less than 1 weight percent. In one preferred embodiment, the cap layer contains no impact modifier.

**Interior high impact layer**

The thin multi-layer paneling structure of the invention has at least one high impact resistant interior layer. This could be an impact-resistant thermoplastic, a blend of thermoplastics where the blend demonstrates impact-resistance, a blend of one or more thermoplastics and one or more thermoplastic elastomers and/or thermoplastic vulcanizates where the blend demonstrates impact-resistance, a thermoset polymer or a polymer composite. The high impact layer has an ASTM D256 notched Izod result at 23°C of greater than 4.4 kg-cm/cm (0.8 ft-lb/in), preferably greater than 5.4 kg-cm/cm (1.0 ft-lb/in), and more preferably greater than 7.1 kg-cm/cm (1.3 ft-lb/in).

Useful high impact resistant thermoplastics include acrylonitrile butyl styrene (ABS) polyvinyl chloride (PVC), and high impact polystyrene (HIPS), polycarbonate (PC), a blend of acrylic polymer and polylactic acid, impact modified acrylics such as RNEW® from Arkema, impact modified styrenics, polyamides, polyimides, polyesters, polyurethanes, and blends thereof. Preferred thermoplastics are ABS and polycarbonate.

Useful composites include, but are not limited to, thermoplastic resins that are reinforced with particles or nanoparticles including but not limited to graphite, carbon nanotubes, and silica; and/or reinforced with fibers, including but not limited to glass fibers, carbon fibers, and natural fibers. The particles and/or nanoparticles may have a mechanical modulus greater than or less than the continuous phase. The fibers could be in the form of individual fibers, braided fibers, and woven or non-woven mats. Thermoplastic composites include those with a matrix of ABS, PVC, HIPS, acrylic polymers, polyamides, polyurethanes, styrenics, polyether ketone ketone, and polyether ether ketone. Useful thermoset matrices include, but are not limited to polyesters or epoxies.

In one embodiment, a composite is formed using an acrylic liquid resin system containing a blend of acrylic monomer, acrylic polymer and an initiator. The liquid resin system is used to impregnate fibers, followed by polymerization.

ELIUM® resins from Arkema are a useful example of such a system.

In one embodiment, the interior high impact resistant polymer is a blend of an acrylic resin and a polyester, such as a polylactic acid.

The thickness of the entire multi-layer structure depends on the final application of that structure, but is typically in the range of 0.1 mm to 30 mm and preferably 1.0 mm to 5 mm.

## Manufacturing

The multi-layer structure of the invention may be manufactured by several different means, as known in the art. The structure could be formed by coextrusion, extrusion lamination, extrusion coating, in-mold decoration, sequential injection molding, thermo-forming of a coextruded sheet or cast sheet, RTM-TS (resin transfer molding with in-mold decoration), and 3D printing (additive manufacturing).

## Properties

The thin multi-layer structure of the invention has several properties that make it especially useful in many application.

The high gloss cap has a 60° gloss of greater than 80, preferably greater than 85, and more preferably greater than 90, as measured by a BYK Gardner Micro-Tri-Gloss 20/60/85 degree Gloss Meter.

The high gloss cap is resistant to chemicals, marring, scratching, crazing, and color shift, as well as to gloss reduction. The most significant appearance change after surface chemical exposure for opaque colored samples is gloss reduction, which is used in the current invention to characterize the chemical damage and success of restoration.

The gloss of the high gloss cap can be easily restorable should damage occur. Since the cap layer is thicker than a typical coating, there is additional material to remove in order to restore the surface aesthetic. It can be restored by polishing, which cannot be achieved with a painted surface. Other means to facilitate restoration include, but are not limited to buffing, wiping, chemical treatment, and/or sanding.

The structure could be transparent or translucent, which is not possible for a painted automobile or other type of panel.

## Applications/uses

The multi-layer structure of the invention, because of its excellent gloss, mar and scratch resistance, and the ability to restore the gloss, is an excellent material for use in many applications and articles. These include, but are not limited to internal and exterior paneling, automotive body panels, auto body trim, recreational vehicle body panels or trims, exterior panels for recreational sporting equipment, marine equipment, exterior panels for outdoor lawn, garden and agricultural equipment and exterior paneling for marine, aerospace structures, aircraft, public transportation applications, interior paneling applications, interior automotive trims, interior panels for marine equipment, interior panels for aerospace and aircraft, interior panels for public transportation applications, and paneling for appliances, furniture, and cabinets.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

## EXAMPLES

Chemical resistance test method

Chemicals such as butylene glycol and glyceryl stearate typically found in sunscreens are applied to plastic surfaces in this test. The high gloss acrylic capstock surfaces are exposed to sunscreen chemicals at 85°C for 30 minutes and 24 hours. The detailed test method is as follows: For 6x6 inch samples conditioned at 85°C for one hour and rubbed with ten back-and-forth strokes with a PIG Hazmat pad soaked with a test chemical, then wiped with a clean PIG Hazmat pad, washed, and reconditioned for at least one hour, and 60° gloss re-measured. The test chemicals for the rub are a mixture of butylene glycol and glyceryl stearate typically found in sunscreens. The cloths used in the test may be 3"x14" PIG Hazmat Pads (MAT302) or 3"x14" PIG Hazmat Pads (MAT423).

After the chemical exposure at the designated temperatures, the samples were cooled down and stabilized at room temperature for an hour before being washed with de-ionized water and wiped clean. The starting surface gloss and final surface gloss are characterized by a BYK Gardner Micro-Tri-Gloss 20/60/85 degree Gloss Meter and the 60° is recorded (measured parallel to the rubbing direction). The measurement unit conforms to the standards DIN 67530, ISO 2813, ASTM D 523 and BS 3900 Part D 5. Values reported are the percentage of surface gloss that is retained after chemical exposure.

Buffing Method

The high gloss acrylic surface is buffed and polished with the following method. Apply tallow and rouge to a cotton muslin buffing wheel. Buff sample for 30-240 seconds with light pressure below the axis of the wheel; enough pressure to let the wheel graze the surface of the sample. Following the buffing step, apply light pressure on sample with a cotton flannel polishing wheel for 10 seconds to further smooth out the surface. After buffing and polishing, clean the acrylic surface with soap and water and dry with cotton cloth.

Scratching Test Method

The high gloss acrylic surface is scratched according to the following method. A 6" x 6" injection molded high gloss acrylic plaque is conditioned at 50 $\pm$ 5% relative humidity at 23 $\pm$ 1 °C for 48 hours. Then, the surface is scratched by a spherical asperity having a radius of curvature of 1 $\pm$ 0.1 mm and 15 N scratch load on a Taber multi-finger scratch tester Model 710. The scratching speed is 100 $\pm$ 5 mm/s and the length of the scratch is 140 mm.

Paper Polishing Method

Samples exposed to scratching damaged were paper polished within 1 hour after scratching by the following method. A 4" x 4" polishing paper (3M™ 281Q Wetordry™ 2 micron polishing paper) was wrapped around a dense sponge. Using light pressure and a circular polishing motion, the scratched acrylic surface was polished by hand with the polishing paper continuously for 5 minutes. After paper polishing the acrylic surface was washed with soap and water and dried with cotton cloth. The 20 surface gloss of a non-scratched region of the plaque was measured before and after paper polishing with a BYK Gardner Micro-Tri-Gloss 20/60/85 degree Gloss Meter as previously described.

Scratch Visibility Analysis

The visibility of scratch damage is quantified by an optical microscopy method. A digital image of the scratched region of the surface is captured in bright-field mode with a Nikon ME600 optical microscope equipped with a Pixelink PL-D 685 color camera at 100x magnification. The image is converted to an RGB color format, where each pixel color is expressed by R, G and B values (integer values 0 to 255) for the Red, Green and Blue components of the pixel color, according to the RGB color system. Then, the R, G and B values are measured for each pixel within two analysis regions of identical size and dimensions, A and B. Region A is entirely contained within the scratched region, and region B is adjacent to Region A and entirely contained within the non-scratched region. Both regions must contain an area greater than 1000 pixels. For each region, the average R, G, and B values of all pixels are calculated. Finally, the Scratch Visibility Value is calculated according to:

$$\text{Scratch Visibility Value} = \left| \left[ (R_A + G_A + B_A)/3 \right] - \left[ (R_B + G_B + B_B)/3 \right] \right|$$

Where $R_A$, $G_A$ and $B_A$ are the average Red, Green and Blue color values, respectively, of all pixels in Region A. Likewise, $R_B$, $G_B$ and $B_B$ are the average Red, Green and Blue color values, respectively, of all pixels in Region B. It follows that scratch visibility increases with increasing Scratch Visibility Value.

Reference **Example 1** Gloss Restoration after Chemical Exposure Damage

Chemicals such as butylene glycol and glyceryl stearate typically found in sunscreens can cause significant damage to acrylic materials at high temperatures (85 °C), This Example demonstrates the removal of surface damages and/or surface residue and the restoration of surface gloss and color. Table 1 shows the gloss retention before and after 30 $\pm$ 10 seconds of buffing. The acrylic materials were exposed to a sunscreen that contains a mixture of butylene glycol and glyceryl stearate as main component at 85°C for 24 hours before buffing, using the chemical resistance test method described above. After the initial 30 $\pm$ 10 seconds of buffing, the surface gloss of the high gloss acrylic capstock can be restored to as high as 80% of the original 60° surface gloss. To restore the high gloss surface to 90% of the original gloss, repeated buffing was carried out as illustrated in Table 2, where 2 minutes of total buffing time can restore the gloss to within 10% of the original gloss.

**Table 1:** Gloss Retention After Chemical Exposure Damage, Before and After 30 ± 10 seconds Buffing (samples are exposed to 85 °C for 24 hours, sunscreen)

| Injection molded | Original Gloss (60 °) | After chemical resistance Test, before Buffing | After Buffing |
|---|---|---|---|
| Sample 1 | 90.2 | 10.4% | 70.3% |
| Sample 2 | 89.7 | 39.0% | 80.9% |
| Sample 3 | 87.6 | 26.6% | 72.7% |
| Sample 4 | 91.4 | 32.2% | 58.9% |
| Sample 5 | 86.6 | 4.62% | 58.5% |

Sample 1 = clear PMMA/EA copolymer having an EA comonomer content of 1-10 wt% and a weight average molecular weight in the range of 70,000 to 110,000 g/mol.

Sample 2 = clear PMMA/EA copolymer having an EA comonomer content of 1-10 wt% and a weight average molecular weight in the range of 100,000 to 200,000 g/mol.

Sample 3 = clear PMMA/EA copolymer having an EA comonomer content of 1-10 wt% and a weight average molecular weight in the range of 70,000 to 110,000 g/mol, with 10-35 wt % of impact modifier based on the weight of the PMMA/EA copolymer.

Sample 4 = clear PMMA/EA copolymer having an EA comonomer content of 1-10 wt% and a weight average molecular weight in the range of 70,000 to 110,000 g/mol, with 30-60 wt % of impact modifier based on the weight of the PMMA/EA copolymer.

Sample 5 = black PMMA/EA copolymer having an EA comonomer content of 0.1 to 2.0 wt% and a weight average molecular weight in the range of 70,000 to 110,000 g/mol, with 0.5 to 15 wt % of impact modifier base on the weight of the PMMA/EA copolymer.

**Table 2:** Change in Gloss of Sample 3 with Repeat Buffing

| Total Time (minutes) | Gloss (60 °) | Gloss Retention |
|---|---|---|
| 0 | 4.8 | 5.54% |
| 0.5 | 50.3 | 58.1% |
| 1.0 | 64.7 | 74.7% |
| 2.0 | 80.5 | 93.0% |
| 3.0 | 79.6 | 91.9% |
| 4.0 | 80.8 | 93.3% |

Reference **Example 2: Chemical Resistance Test**

Samples of acrylic capstocks were exposed to sunscreen at 85 °C according to the chemical resistance test method described.

Sample 6 is a black PMMA/EA copolymer having an EA comonomer content of 0.1 to 2.0-wt% and a weight average molecular weight in the range of 70,000 to 110,000 g/mol,

Sample 7 is a black PMMA/MAA copolymer ( having a MAA comonomer content of 1-10 wt% and a weight average molecular weight in the range of 70,000 to 110,000 g/mol),

Both samples are tested in duplicates, and both samples exhibit more than 90% gloss retention and minimal color change (delta E less than 3), as shown in Table 3.

TABLE 3

| Sample | Initial Gloss (60°) | Gloss After Exposure (60°) | 60° Gloss Retention | Delta E |
|---|---|---|---|---|
| 6 | 86.4 | 90.7 | 104.9% | 2.16 |
| 6 | 86.1 | 92.8 | 107.8% | 2.48 |
| 7 | 87.2 | 85.5 | 98.1% | 0.44 |
| 7 | 87.6 | 85.9 | 98.1% | 0.41 |

Reference **Example 3: Surface Restoration after Scratch Damage**

Exterior paneling often incurs surface damage due to scratching and abrasion. This example demonstrates the utility of scratch resistant formulations such as those described in WO 18132818 A3 for the exterior layer of high gloss exterior paneling. Also demonstrated is the restoration of a surface after scratching damage via paper polishing. 6" x 6" samples plaques were prepared by injection molding and then affixed to steel plates for scratch tests and paper polishing. Samples were subjected to scratching according to the scratching test method described above, and then paper polished according to the paper polishing method described above. The scratch visibility, as well as surface gloss before and after paper polishing are listed in Table 4.

Sample 8 is a black PMMA/EA copolymer having an EA comonomer content of 0.1 to 2.0 wt% and a weight average molecular weight in the range of 70,000 to 110,000 g/mol.

Sample 9 is the same as Sample 8, with the addition of 15 wt% of Cabot CAB-O-SIL® TS622 fumed silica. Sample 9 was prepared by melt compounding the black PMMA/EA copolymer and Cabot CAB-O-SIL® TS622 fumed silica on a 27mm Leistritz ZSE-27HP twin-screw extruder.

The initial gloss of Sample 8 and Sample 9 were above 85 points for 60° gloss and above 78 points for 20° gloss, despite the presence of nanoparticle reinforcement in Sample 9. After scratching, the scratch visibility of Sample 8 (38.1) was significantly greater than Sample 9 (5.6). Visually, the scratch visibility of Sample 8 also appeared more severe than Sample 9. After paper polishing, the gloss of both Sample 8 and 9 reduced, however the gloss retention of sample 9 (98%) was greater than sample 8 (76%). The scratch visibility after paper polishing reduced for both samples, with the greatest reduction for sample 8. Sample 8 demonstrated relatively low 20° gloss retention after paper polishing (76%). Sample 9 demonstrated the useful combination of high initial gloss, low scratch visibility both before and after paper polishing, , as well as excellent (98%) 20° gloss retention after paper polishing.

| Sample ID | Initial Gloss (20°/60°) | Gloss after Paper Polishing (20°/60°) | 20° Gloss Retention | Scratch Visibility Value Before Paper Polishing | Scratch Visibility Value After Paper Polishing |
|---|---|---|---|---|---|
| Sample 8 | 79.9 / 86.5 | 60.4 / 78.9 | 76% | 38.1 | 4.7 |
| Sample 9 | 78.3 / 85.2 | 76.4 / 83.4 | 98% | 5.6 | 3.2 |

With low heat buildup colorants such as IR reflective pigments or IR transmitting organic dyes, the heat buildup (temperature rise of plastic above ambient) of dark acrylic capstocks can be reduced as much as 30 °F (determined using ASTM D4803). Accordingly, the service temperature of exterior paneling with IR reflective pigments or IR transmitting organic dyes will be much lower than the service temperature of exterior paneling without IR reflective pigments nor IR transmitting organic dyes. The lower service temperature may improve chemical resistance by reducing the thermodynamic free energy of mixing between the polymeric exterior paneling and the chemical to which the polymer substrate is exposed. It follows that the lower service temperature may significantly reduce the penetration of chemicals into the exterior paneling, defer the potential degradation caused by these chemicals, and reduces the temperature differences between the layers within the exterior paneling, which may be a multilayer structure, to minimize the possibility of a delamination failure within the exterior paneling. Lower service temperature may also reduce the temperature difference between the exterior paneling and any supporting material to which the exterior panel may be adhered, such as metal, to minimize the possibility of delamination failure of the adhesive interface.

**Claims**

1.    A multi-layer polymer structure comprising:

   a. a thin, high gloss outer polymeric cap layer, having a 60° gloss of greater than 80, preferably greater than 85, and more preferably greater than 90, as measured by a BYK Gardner Micro-Tri-Gloss 20/60/85 degree Gloss Meter, wherein said cap layer has a thickness of from 0.01 mm to 0.8 mm, preferably 0.0127 mm to 0.65mm, and more preferably from 0.04 mm to 0.38 mm, wherein said thin, high gloss outer polymeric cap layer comprises as the matrix polymer at least one acrylic and/or styrenic polymer; and

   b. an internal high impact resistant layer, wherein said high impact layer has an ASTM D256 notched Izod result at 23°C of greater than 4.4 kg-cm/cm (0.8 ft-lb/in), preferably greater than 5.4 kg-cm/cm (1.0 ft-lb/in), and more preferably greater than 7.1 kg-cm/cm (1.3 ft-lb/in), wherein said internal high impact resistant layer, comprises a thermoplastic selected from the group consisting of acrylonitrile butyl styrene (ABS), polyvinyl chloride (PVC), high impact polystyrene (HIPS), polycarbonate (PC), a blend of acrylic polymer and polylactic acid, impact modified acrylics, impact modified styrenics, polycarbonate, polyamides, polyimides, polyurethanes, polyesters, and blends thereof

2. The multi-layer polymer structure of claim 1, wherein said thin, high gloss outer polymeric cap layer has a heat deflection temperature (HDT), as measured by ASTM D648 (1.8 MPa) of at least 79°C (175°F), when prior to measurement, the samples are annealed at 80°C for 96 hours then slow-cooled over 4 hours to 23°C.

3. The multi-layer polymer structure of claim 1, wherein said thin, high gloss outer cap layer contains less than 5 weight percent, preferably less than 3 weight percent, preferably less than 1 weight percent, and most preferably no impact modifiers.

4. The multi-layer polymer structure of claim 1, wherein said thin, high-gloss outer polymeric layer further comprises 0-20 weight percent, preferably 10-15 weight percent nanoparticles, and wherein said nanoparticles are preferably selected from the group consisting of silica, alumina, zinc oxide, barium oxide, molybdenum disulfide, boron nitride, tungsten disulfide, titanium oxide, Nanographene, nanographite, graphite nanoplatelets and graphite oxide nanoparticles.

5. The multi-layer polymer structure of claim 1, wherein the polymer of said thin, high gloss outer polymeric cap layer has a weight average molecular weight of at least 70,000 g/mol.

6. The multi-layer polymer structure of claim 1,

wherein said high-impact layer is a composite composition containing particles, nanoparticles, and/or fibers, preferably
wherein said composite composition is a fiber- reinforced acrylic composite, said composite formed from a blend of one or more acrylic polymers with one or more acrylic monomers that are impregnated into said fibers, followed by polymerization.

7. The multi-layer polymer structure of claim 1, wherein said structure further comprises a tie layer or adhesive layer between the exterior high gloss layer, and interior high impact layer.

8. A multi-layer polymer structure, comprising said thin multi-layer structure of claim 1 over a substrate, wherein said substrate is selected from the group consisting of metal; ceramics; cellulosics; thermoplastic, elastomeric, and thermoset polymers having a thickness in the range 0.1 mm to 30 mm and preferably 1.0 mm to 5 mm.

9. The multi-layer polymer structure of claim 1, wherein said structure comprises two high gloss outer cap layers, one on either side of the internal high impact resistant layer.

10. A method for restoring the gloss on a chemically or physically marred multi-layer polymer structure of claim 1, wherein said method includes the step of removing or hiding the mar, preferably wherein said mar is removed through the process of buffing, polishing, wiping, chemical treating, and/or sanding said multi-layer structure, wherein said gloss is restored to within 30%, preferably 20%, and most preferably within 10% of the original gloss, as measured by a BYK Gardner Micro-Tri-Gloss 20/60/85 degree Gloss Meter.

11. The multi-layer polymeric structure of claim 1, wherein said structure is manufactured by thermoforming, in-mold decorating, sequential injection molding, coextrusion, resin transfer molding with in-mold decoration, or 3D printing (additive manufacturing).

12. An article comprising the multi-layer polymeric structure of claim 1, wherein said article is selected from the group consisting of exterior paneling, automotive body panels, autobody trim, recreational vehicle body panels or trims, exterior panels for recreational sporting equipment, marine equipment, exterior panels for outdoor lawn, garden and agricultural equipment and exterior paneling for marine, aerospace structures, aircraft, public transportation applications, interior paneling applications, interior automotive trims, interior panels for marine equipment, interior panels for aerospace and aircraft, interior panels for public transportation applications, and paneling for appliances, furniture, and cabinets.

**Patentansprüche**

1. Mehrschichtige Polymerstruktur, umfassend:

   a. eine dünne, hochglänzende äußere polymere Deckschicht mit einem 60°-Glanz von mehr als 80, vorzugsweise mehr als 85 und besonders bevorzugt mehr als 90, gemessen mit einem BYK Gardner Micro-Tri-Gloss 20/60/85 Grad Glanzmessgerät, wobei die Deckschicht eine Dicke von 0,01 mm bis 0,8 mm, vorzugsweise 0,0127 mm bis 0,65 mm und bevorzugter von 0,04 mm bis 0,38 mm aufweist, wobei die dünne, hochglänzende äußere polymere Deckschicht als Matrixpolymer mindestens ein Acryl- und/oder Styrolpolymer umfasst; und
   b. eine innere hochschlagzähe Schicht, wobei die hochschlagzähe Schicht ein ASTM D256-Kerbschlagzähergebnis bei 23°C von mehr als 4,4 kg-cm/cm (0,8 ft-lb/in), vorzugsweise mehr als 5,4 kg-cm/cm (1,0 ft-lb/in) und bevorzugter mehr als 7,1 kg-cm/cm (1.3 ft-lb/in) aufweist, wobei die innere hochschlagzähe Schicht einen Thermoplasten umfasst, der aus der Gruppe ausgewählt ist, die aus Acrylnitrilbutylstyrol (ABS), Polyvinylchlorid (PVC), hochschlagzähem Polystyrol (HIPS), Polycarbonat (PC), einer Mischung aus Acrylpolymer und Polymilchsäure, schlagzähmodifizierten Acrylen, schlagzähmodifizierten Styrolen, Polycarbonat, Polyamiden, Polyimiden, Polyurethanen, Polyestern und Mischungen davon besteht.

2. Mehrschichtige Polymerstruktur nach Anspruch 1, wobei die dünne, hochglänzende äußere polymere Deckschicht eine nach ASTM D648 (1,8 MPa) gemessene Wärmeverformungstemperatur (HDT) von mindestens 79°C (175°F) aufweist, wenn die Proben vor der Messung 96 Stunden lang bei 80°C getempert und dann über 4 Stunden langsam auf 23°C abgekühlt werden.

3. Mehrschichtige Polymerstruktur nach Anspruch 1, wobei die dünne, hochglänzende äußere Deckschicht weniger als 5 Gewichtsprozent, vorzugsweise weniger als 3 Gewichtsprozent, vorzugsweise weniger als 1 Gewichtsprozent und am meisten bevorzugt keine Schlagzähigkeitsmodifikatoren enthält.

4. Mehrschichtige Polymerstruktur nach Anspruch 1, wobei die dünne, hochglänzende äußere Polymerschicht ferner 0-20 Gewichtsprozent, vorzugsweise 10-15 Gewichtsprozent, Nanopartikel umfasst und wobei die Nanopartikel vorzugsweise aus der Gruppe ausgewählt sind, die aus Siliciumdioxid, Aluminiumoxid, Zinkoxid, Bariumoxid, Molybdändisulfid, Bornitrid, Wolframdisulfid, Titanoxid, Nanographen, Nanographit, Graphit-Nanoplättchen und Graphitoxid-Nanopartikeln besteht.

5. Mehrschichtige Polymerstruktur nach Anspruch 1, wobei das Polymer der dünnen, hochglänzenden äußeren polymeren Deckschicht ein gewichtsmittleres Molekulargewicht von mindestens 70.000 g/mol aufweist.

6. Mehrschichtige Polymerstruktur nach Anspruch 1,

   wobei die hochschlagfeste Schicht eine Verbundzusammensetzung ist, die Partikel, Nanopartikel und/oder Fasern enthält, vorzugsweise
   wobei die Verbundzusammensetzung ein faserverstärkter Acrylverbund ist, wobei der Verbund aus einer Mischung aus einem oder mehreren Acrylpolymeren mit einem oder mehreren Acrylmonomeren gebildet wird, die in die Fasern imprägniert werden, gefolgt von einer Polymerisation.

7. Mehrschichtige Polymerstruktur nach Anspruch 1, wobei die Struktur außerdem eine Verbindungsschicht oder Klebeschicht zwischen der äußeren Hochglanzschicht und der inneren hochschlagzähen Schicht umfasst.

8. Mehrschichtige Polymerstruktur, die die dünne mehrschichtige Struktur nach Anspruch 1 über einem Substrat umfasst, wobei das Substrat aus der Gruppe ausgewählt ist, die aus Metall; Keramik; Zelluloseprodukten; und thermoplastischen, elastomeren und duroplastischen Polymeren mit einer Dicke im Bereich von 0,1 mm bis 30 mm und vorzugsweise 1,0 mm bis 5 mm besteht.

9. Mehrschichtige Polymerstruktur nach Anspruch 1, wobei die Struktur zwei hochglänzende äußere Deckschichten, eine auf jeder Seite der inneren hochschlagfesten Schicht, umfasst.

10. Verfahren zur Wiederherstellung des Glanzes auf einer chemisch oder physikalisch verkratzten mehrschichtigen Polymerstruktur nach Anspruch 1, wobei das Verfahren den Schritt des Entfernens oder Verbergens der Verkratzung einschließt, wobei die Verkratzung vorzugsweise durch den Prozess des Aufrauens, Polierens, Wischens, der chemischen Behandlung und/oder des Schleifens der mehrschichtigen Struktur entfernt wird, wobei der Glanz auf bis zu 30 %, vorzugsweise 20 % und am meisten bevorzugt auf bis zu 10 % des ursprünglichen Glanzes wiederhergestellt wird, wie mit einem BYK Gardner Micro-Tri-Gloss 20/60/85 Grad Glanzmessgerät gemessen.

11. Mehrschichtige Polymerstruktur nach Anspruch 1, wobei die Struktur durch Thermoformen, Dekoration in der Form, sequentielles Spritzgießen, Coextrusion, Harztransfergießen mit Dekoration in der Form oder 3D-Druck (additive Fertigung) hergestellt ist.

12. Gegenstand, der die mehrschichtige Polymerstruktur nach Anspruch 1 umfasst, wobei der Gegenstand aus der Gruppe ausgewählt ist, die aus Außenverkleidungen, Karosserieverkleidungen für Kraftfahrzeuge, Karosserieteilen, Karosserieverkleidungen oder Karosserieteilen für Freizeitfahrzeuge, Außenverkleidungen für Freizeitsportgeräte, Schiffsausrüstungen, Außenverkleidungen für Rasenflächen im Freien, Garten- und Landwirtschaftsgeräten und Außenverkleidungen für Schiffe, Luft- und Raumfahrtstrukturen, Flugzeuge, Anwendungen im öffentlichen Verkehrswesen, Innenverkleidungen, Innenverkleidungen für Kraftfahrzeuge, Innenverkleidungen für Schiffsausrüstungen, Innenverkleidungen für Luft- und Raumfahrt und Flugzeuge, Innenverkleidungen für Anwendungen im öffentlichen Verkehrswesen und Verkleidungen für Geräte, Möbel und Schränke.

## Revendications

1. Structure polymère multicouche comprenant :

   a. une fine couche polymère de recouvrement externe à brillance élevée, ayant une brillance à 60° supérieure à 80, de préférence supérieure à 85 et plus préférablement supérieure à 90, mesurée à l'aide du brillancemètre BYK Gardner Micro-Tri-Gloss à 20/60/85 degrés, ladite couche de recouvrement ayant une épaisseur de 0,01 mm à 0,8 mm, de préférence de 0,0127 mm à 0,65 mm et plus préférablement de 0,04 mm à 0,38 mm, ladite fine couche polymère de recouvrement externe à brillance élevée comprenant en tant que matrice polymère au moins un polymère acrylique et/ou styrénique ; et
   b. une couche interne à haute résistance au choc, ladite couche à haute résistance au choc ayant un résultat à l'essai de résistance au choc Izod d'éprouvettes entaillées selon ASTM D256 à 23 °C supérieur à 4,4 kg-cm/cm (0,8 pi-lb/in [pied-livre/pouce]), de préférence supérieur à 5,4 kg-cm/cm (1,0 pi-lb/in), et plus préférablement supérieur à 7,1 kg-cm/cm (1,3 pi-lb/in), ladite couche interne à haute résistance au choc comprenant un thermoplastique choisi dans le groupe consistant en : acrylonitrile butadiène styrène (ABS), polychlorure de vinyle (PVC), polystyrène au choc (HIPS), polycarbonate (PC), un mélange de polymère acrylique et d'acide polylactique, acryliques antichocs, styréniques antichocs, polycarbonate, polyamides, polyimides, polyuréthanes, polyesters, et mélanges de ceux-ci.

2. Structure polymère multicouche selon la revendication 1, dans laquelle ladite fine couche polymère de recouvrement externe à brillance élevée a une température de fléchissement à chaud (HDT), mesurée selon ASTM D648 (1,8 MPa), d'au moins 79 °C (175 °F) lorsque, préalablement à la mesure, les éprouvettes ont été recuites à 80 °C pendant 96 heures puis lentement refroidies pendant 4 heures pour atteindre 23 °C.

3. Structure polymère multicouche selon la revendication 1, dans laquelle ladite fine couche polymère de recouvrement externe à brillance élevée contient moins de 5 % en poids, de préférence moins de 3 % en poids, de préférence moins de 1 % en poids, et plus préférablement aucun modificateur d'impact.

4. Structure polymère multicouche selon la revendication 1, dans laquelle ladite fine couche polymère de recouvrement externe à brillance élevée comprend en outre 0-20 % en poids et de préférence 10-15 % en poids de nanoparticules, lesdites nanoparticules étant de préférence choisies dans le groupe consistant en la silice, l'alumine, l'oxyde de zinc, l'oxyde de baryum, le disulfure de molybdène, le nitrure de bore, le disulfure de tungstène, l'oxyde de titane, le nano-graphène, le nano-graphite, les nanoplaquettes de graphite et les nanoparticules d'oxyde de graphite.

5. Structure polymère multicouche selon la revendication 1, dans laquelle le polymère de ladite fine couche polymère de recouvrement externe à brillance élevée a une masse moléculaire moyenne en poids d'au moins 70 000 g/mol.

6. Structure polymère multicouche selon la revendication 1, dans laquelle ladite couche à haute résistance au choc est une composition composite contenant des particules, des nanoparticules et/ou des fibres ; ladite composition composite étant de préférence un composite acrylique renforcé de fibres, ledit composite étant formé à partir d'un mélange d'un ou plusieurs polymères acryliques avec un ou plusieurs monomères acryliques imprégnés dans lesdites fibres, suivi d'une polymérisation.

7. Structure polymère multicouche selon la revendication 1, ladite structure comprenant en outre une couche de liaison ou une couche adhésive entre la couche extérieure à brillance élevée, et la couche intérieure à haute résistance au choc.

8. Structure polymère multicouche, comprenant ladite structure fine multicouche selon la revendication 1, au-dessus d'un substrat, ledit substrat étant choisi dans le groupe consistant en du métal, des céramiques, et des polymères cellulosiques, thermoplastiques, élastomères et thermodurcissables ayant une épaisseur comprise dans la plage de 0,1 mm à 30 mm et de préférence 1,0 mm à 5 mm.

9. Structure polymère multicouche selon la revendication 1, ladite structure comprenant deux couches externes de recouvrement à brillance élevée, une de chaque côté de la couche interne à haute résistance au choc.

10. Procédé permettant de restaurer la brillance sur une structure polymère multicouche selon la revendication 1 qui est chimiquement ou physiquement ternie, ledit procédé comportant l'étape consistant à retirer ou cacher le ternissement, ledit ternissement étant de préférence retiré grâce à un processus de lustrage, polissage, essuyage, traitement chimique et/ou ponçage de ladite structure multicouche, ladite brillance étant restaurée avec une différence de moins de 30 %, de préférence moins de 20 % et plus préférablement moins de 10% par rapport à la brillance d'origine, mesurée par un brillancemètre BYK Gardner Micro-Tri-Gloss à 20/60/85 degrés.

11. Structure polymère multicouche selon la revendication 1, ladite structure étant fabriquée par thermoformage, décoration en moule, moulage par injection séquentielle, coextrusion, moulage par transfert de résine avec décoration en moule, ou impression 3D (fabrication additive).

12. Article comprenant la structure polymère multicouche selon la revendication 1, ledit article étant choisi dans un groupe consistant en : lambris extérieurs, panneaux de carrosserie, garniture de carrosserie, panneaux ou garnitures de véhicules de plaisance, panneaux extérieurs pour équipements sportifs récréatifs, équipements maritimes, panneaux extérieurs pour pelouse extérieure, équipements de jardin et agricoles et panneaux extérieurs maritimes, structures aérospatiales, aéronef, applications dans les transports en commun, applications de lambrissage d'intérieur, garnitures automobiles intérieures, panneaux intérieurs pour équipements maritimes, panneaux intérieurs pour l'aérospatiale et l'aviation, panneaux intérieurs pour applications dans les transports en commun, et panneaux pour appareils électroménagers, meubles et rangements.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6852405 B
- US 5975625 A
- WO 2018132818 A2
- WO 18132818 A3